(19) Europäisches Patentamt
European Patent Office
Office européen des brevets

(11) **EP 4 238 630 A1**

(12) **EUROPEAN PATENT APPLICATION**

(43) Date of publication:
**06.09.2023 Bulletin 2023/36**

(21) Application number: **22160299.8**

(22) Date of filing: **04.03.2022**

(51) International Patent Classification (IPC):
**B01D 53/14** (2006.01)     **B01D 53/96** (2006.01)

(52) Cooperative Patent Classification (CPC):
**B01D 53/1475; B01D 53/1418; B01D 53/1493;
B01D 53/46; B01D 53/62; B01D 53/78;
B01D 53/965;** B01D 2251/202; B01D 2251/208;
B01D 2257/104; B01D 2257/504; B01D 2258/0283

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Estech A/S
5700 Svendborg (DK)**

(72) Inventors:
• **Lindner Bonde, Jacob
Svendborg (DK)**
• **Stougaard Jakobsen, Jan
Svendborg (DK)**

(74) Representative: **Dragsted Partners A/S
Rådhuspladsen 16
1550 Copenhagen V (DK)**

(54) **ELECTROLYTIC REGENERATION OF CO2 RICH ALKALINE ABSORBENT FOR CO2 RECOVERY**

(57)     A method of preparing a substantially pure gaseous carbon dioxide from a gaseous mixture of carbon dioxide (CO2) and oxygen (O2), wherein said gaseous mixture is withdrawn from an anode chamber (313) of an electrolytic cell (310), and wherein said electrolytic cell (310) is fed a spent aqueous scrubbing liquid from a scrubber (210), wherein said scrubber (210) scrubs a gas [having a first carbon dioxide concentration] with a first alkaline, aqueous scrubbing liquid, wherein said spent aqueous scrubbing liquid is regenerated in the electrolytic cell (310) by electrolysis, wherein the regeneration further comprises generating a gaseous mixture of oxygen and carbon dioxide (CO2) in the anode chamber (313); and wherein said gaseous mixture comprises between 66 and 80 % carbon dioxide and between 20 % and 34 % oxygen, the method comprising the step of: treating said gaseous mixture of oxygen and carbon dioxide (CO2) to remove at least 50 % oxygen from said mixture.

Fig. 2

EP 4 238 630 A1

## Description

Technical field

The present invention relates to a method of producing a substantially pure gaseous carbon dioxide ($CO_2$), by separating gaseous mixture of carbon dioxide ($CO_2$) and oxygen ($O_2$) after an electrolytic regeneration of a spent aqueous scrubbing liquid from a process of scrubbing a gas, such as flue gas comprising carbon dioxide. The substantially pure carbon dioxide is then compressed to a liquid $CO_2$ for transport. The CO2 may be extracted from flue gas, ambient air or other sources.

Background

Carbon dioxide ($CO_2$) is a gas that when emitted into the atmosphere is damaging to the climate as it contributes to the green-house effect and rise in global temperature. It is for example produced as a byproduct when fossil fuel, e.g. coal, gasoline or diesel, is burned. Coal- and gas-fired power plants accounts for a large share of $CO_2$ emissions. It is a goal for many sectors to lower carbon dioxide emissions.

Emitted gases resulting from combustion and comprising $CO_2$ are typically denoted flue gases or exhaust gases. Depleting such emitted gases of $CO_2$ by lowering the CO2 content in the emitted gases, can be done by so called scrubbing of the gases, i.e. removing the $CO_2$ from the gas stream by absorbing/dissolving $CO_2$ in a liquid.

As described in US11219860, the $CO_2$ withdrawn from the scrubbing process, or from an anode chamber of an electrolytic cell, after regeneration of a scrubbing liquid, is then conventionally compressed, or cooled and compressed to be transported of site for other downstream uses. However, the process of cooling and compressing gaseous $CO_2$ into a liquid carbon dioxide requires a substantial amount of power. There is an imperative need for improved scrubbing systems that preferably require less power for the $CO_2$ capture and compression.

Summary

It is in view of the above considerations and others that the embodiments described in this disclosure have been made. It is an object of the present disclosure, to provide an improved method of preparing a substantially pure gaseous carbon dioxide, and a system and uses thereof.

The invention is defined by the appended independent claims. Embodiments are set forth in the appended dependent claims and in the following description.

Accordingly, there is provided a method of preparing a substantially pure gaseous carbon dioxide from a gaseous mixture of carbon dioxide ($CO_2$) and oxygen ($O_2$), wherein said gaseous mixture is withdrawn from an anode chamber of an electrolytic cell, and wherein said electrolytic cell is fed a spent aqueous scrubbing liquid from a scrubber, wherein said scrubber scrubs a gas, having a first carbon dioxide concentration with a first alkaline, aqueous scrubbing liquid, wherein said spent aqueous scrubbing liquid is regenerated in the electrolytic cell by electrolysis, wherein the regeneration further comprises generating a gaseous mixture of oxygen and carbon dioxide ($CO_2$) in the anode chamber; and wherein said gaseous mixture comprises between 66 and 80 % carbon dioxide and between 20% and 34% oxygen, the method comprising the steps of: treating said gaseous mixture of oxygen and carbon dioxide ($CO_2$) to remove at least 50% oxygen from said mixture.

This means that at least a substantial amount of oxygen is removed from the mixture. By removing oxygen, i.e. separating $O_2$ from the $CO_2$ of the gaseous mixture form the anode chamber of the electrolytic cell, an increased efficiency is obtained in the $CO_2$ compression stage. The decrease in efficiency correlates with decrease in gas volume that is to be compressed. e.g. if there is 20% $O_2$ in 80% $CO_2$ the energy consumption can be reduced to 80% of the original value.

The carbon capture reaction in the scrubbing step takes place automatically. The operation of the scrubber is thereby an automatic process and requires no power apart from one needed to circulate the liquids. The regeneration process of the first scrubbing liquid that take place in the cathode and anode chambers of the electrolytic cell are electrochemical reactions, which inherently require electrical power. The electrochemical process regenerates the solvent, produces hydrogen at the cathode and a mixture of carbon dioxide ($CO_2$) and oxygen at the anode. The regeneration thus comprises generating gaseous hydrogen in the cathode chamber and a gaseous mixture of oxygen and carbon dioxide in the anode chamber by electrolysis.

According to the first aspect wherein at least 60% of the oxygen is removed from the gaseous mixture, or at least 70% of the oxygen is removed from the gaseous mixture, or at least 80 % of the oxygen is removed from the gaseous mixture, or at least 90% of the oxygen is removed from the gaseous mixture, or at least 95% of the oxygen is removed from the gaseous mixture, or at least 99% of the oxygen is removed from the gaseous mixture. This means that substantially all of the oxygen may be removed before compression, which even further increased the energy saved during the compression stage.

According to the first aspect, the method may further comprise the step of compressing said oxygen depleted gaseous mixture into a substantially pure liquid carbon dioxide. This means that the liquid carbon may easily be transported for other downstream uses. The gas having a first carbon dioxide concentration is any one of a flue gas, an exhaustive gas, air.

According to one alternative of the first aspect wherein the step of treating said gaseous mixture to remove at least 50% oxygen from said mixture comprises: flowing said gaseous mixture through a heating device, thereby consuming said oxygen and creating an output flow of carbon dioxide and dihydrogen oxide ($H_2O$). The heating device may be a separate burner, or for instance a generator producing district heating and power, and the full flow of the gaseous mixture of carbon dioxide and oxygen could be used instead of air. The carbon dioxide and water may thus be further separated by condensation, and the pure $CO_2$ can be further cleaned, cooled and compressed for transport.

The heating device may be fed with a fuel, and wherein said fuel is any one of hydrogen, natural gas or biogas and said hydrogen may be a gaseous hydrogen withdrawn from a cathode chamber of said electrolytic cell.

According to another alternative of the first aspect, the step of treating said gaseous mixture to remove at least 50% oxygen from said mixture may comprise utilising said gaseous mixture as an oxidizer in a processes step of scrubbing a flue gas for $CO_2$.

Through this treatment, if all the oxidant is oxygen mixed with carbon dioxide, the flue gas will intermittently consist of pure $CO_2$, which can thus be cooled and compressed directly for transport with limited pre-treatment.

According to yet another alternative of the first aspect the step of treating said gaseous mixture to remove at least 50% oxygen from said mixture comprises utilising said gaseous mixture as an oxidizing agent in an aerobic biological treatment process.

By an aerobic biological treatment process is meant for instance a wastewater purification process, and through this treatment the oxygen is depleted during the wastewater purification process and the purified $CO_2$ can be collected, cooled and compressed for transport.

According to a second aspect there is provided a system for scrubbing a gas, such as flue gas or exhaustive gas, comprising carbon dioxide to deplete the flue gas of carbon dioxide, the system comprising:

- a scrubber arrangement for scrubbing a gas with an alkaline, aqueous scrubbing liquid, comprising a scrubber; and
- a regeneration arrangement for regenerating spent aqueous scrubbing liquid by electrolysis, wherein:
- the regeneration arrangement comprises an electrolytic cell, comprising an anode chamber comprising an anode inlet for receiving the spent aqueous scrubbing liquid and an anode outlet for withdrawing oxygen and carbon dioxide,
- wherein the scrubber is in flow communication with the electrolytic cell;
- a gas separator device for separating oxygen and carbon dioxide withdrawn from the anode chamber from each other.

a compressor unit for compressing said substantially pure carbon dioxide withdrawn from said separator device.

According to a third aspect, a regeneration arrangement is provided for regenerating a spent aqueous scrubbing liquid to provide alkaline, aqueous scrubbing liquid, the regeneration arrangement comprising an electrolytic cell, comprising an anode chamber comprising an anode inlet for receiving the spent aqueous scrubbing liquid and an anode outlet for withdrawing oxygen and carbon dioxide, and the cathode chamber comprises an outlet for withdrawing regenerated aqueous scrubbing liquid;

- a gas separator device for separating oxygen and carbon dioxide from the anode chamber from each other,
- a compressor unit for compressing carbon dioxide withdrawn from the first gas separator.

According to one alternative of the systems according to the second or third aspect, the gas separator device may be a heating device. By heating device is meant a device such as a burner, an engine or a generator.

According to another alternative, the gas separator device may be an aerobic biological process facility such as a wastewater treatment plant.

According to the second and third aspects, at least 50% of the oxygen is removed from the gaseous mixture of carbon dioxide and oxygen withdrawn from the anode chamber by or in the gas separator device. Alternatively, at least 60% of the oxygen is removed from the gaseous mixture, or at least 70% of the oxygen is removed from the gaseous mixture, or at least 80 % of the oxygen is removed from the gaseous mixture, or at least 90 % of the oxygen is removed from the gaseous mixture, or at least 95 % of the oxygen is removed from the gaseous mixture, or at least 99 % of the oxygen is removed from the gaseous mixture.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.


Brief description of the drawings

These and other aspects, features and advantages of which the invention is capable of will be apparent and elucidated from the following description of embodiments of the present invention, reference being made to the accompanying drawings.

Fig. 1 shows a flow path between a scrubber and an electrolytic cell, and
Fig. 2 shows a regeneration arrangement of the process scheme.


Detailed description

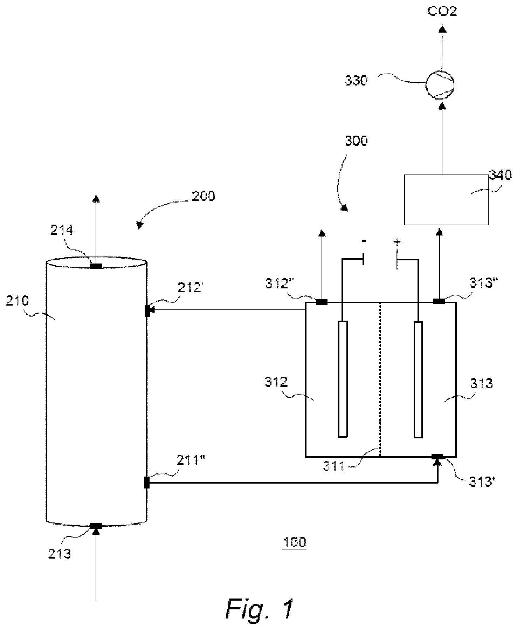

With reference to Fig. 1, a system 100 according to an embodiment is shown having a scrubber arrangement 200 and a regeneration arrangement 300. Here, a method of scrubbing a gas, such as flue gas or an exhaustive gas, comprising carbon dioxide $CO_2$, is schematically illustrated. The scrubber arrangement 200 and the regeneration arrangement 300, may be operated independently.

The gas which is scrubbed in the scrubber may for instance be a flue gas or an exhaustive gas. One alternative is to utilise the scrubber and regeneration in a vehicle. Another option could be so called DAC (direct air capture) applications, where $CO_2$ is captured from the ambient air and a stream of concentrated $CO_2$ is generated. The gas enters the scrubber through the scrubber inlet 213. To deplete the flue gas from carbon dioxide $CO_2$, the scrubbing method can be described as follows. The gas is scrubbed in the scrubber 210 in a counter flow manner with a first alkaline, aqueous scrubbing liquid to dissolve carbon dioxide $CO_2$ as hydrogen carbonate $HCO_3$- and/or as carbonate $CO_3^{2-}$ in the first alkaline, aqueous scrubbing liquid. A first spent aqueous scrubbing liquid comprising dissolved hydrogen carbonate $HCO_3$- and/or carbonate $CO_3^{2-}$ results. The first spent aqueous scrubbing liquid has a pH from about 7 to about 11, or usually from about 7 to about 9, when it leaves at the outlet 211" for withdrawing spent aqueous scrubbing liquid of the scrubber 210. The first spent aqueous scrubbing liquid is then fed to an anode chamber 313 of an electrolytic cell 310 via an anode inlet 313'. The electrolytic cell 310 has apart from the anode chamber 313 also a cathode chamber 312. The anode chamber 313 and the cathode chamber 312 are separated by a membrane 311. This membrane 311 may be semipermeable membrane, being permeable to cations, but essentially impermeable to anions. Thus, the membrane cation-exchange membrane. The electrolysis increases the pH of the first spent aqueous scrubbing liquid in the cathode chamber 312. In the anode chamber 313, the electrolysis further depletes the first spent aqueous scrubbing liquid of hydrogen carbonate HCO3- and of carbonate $CO_3^{2-}$ by decreasing the pH-value to release gaseous carbon dioxide. The outlet 211" for spent aqueous scrubbing liquid of the scrubber 210 is in flow communication with the inlet 313' for the spent aqueous scrubbing liquid of the anode chamber 313. Moreover, the outlet 312" for regenerated aqueous scrubbing liquid of the cathode chamber 312 is flow communication with the inlet 212' for the alkaline, aqueous scrubbing liquid of the scrubber 210.

One can say that the first spent aqueous scrubbing liquid is regenerated by generating gaseous hydrogen $H_2$ and dissolved hydroxide ions OH- in the cathode chamber 312 and a gaseous mixture of oxygen $O_2$ and carbon dioxide $CO_2$ in the anode chamber 313 by electrolysis. This is indicated by the upwards pointing arrows from the cathode outlet 312" and the anode outlet 313" in Fig. 1, respectively. The gaseous hydrogen H2 and dissolved hydroxide ions OH- are withdrawn from the cathode chamber 312 and the gaseous mixture of oxygen $O_2$ and carbon dioxide $CO_2$ are withdrawn from the anode chamber 313. For instance, the hydrogen $H_2$ may be used in downstream processes (not shown) such as in fuel or methanol production. The regenerated alkaline, aqueous scrubbing liquid from the cathode chamber 312 is then recirculated via the inlet 212' for receiving the alkaline, aqueous scrubbing liquid to the scrubber 210. Gas depleted of carbon dioxide $CO_2$ then exits the scrubber 210 via the scrubber outlet 214.

The gaseous mixture of carbon dioxide and oxygen withdrawn from the anode chamber 313 is transported to a separation device 340, where oxygen is removed from the gaseous mixture, such that a stream of substantially pure gaseous $CO_2$ is obtained. The substantially pure gaseous $CO_2$ may then be transferred to a compression unit 330, where the gaseous $CO_2$ is converted into a substantially pure liquid $CO_2$.

Furthermore, the regeneration arrangement 300 also comprises a first gas separator device 340 for separating oxygen $O_2$ and carbon dioxide $CO_2$ withdrawn from the anode chamber 313 from liquid. The first gas separator 340 is arranged upstream the second compressor unit 330.

The composition of the gaseous mixture is typically around 75% $CO_2$ and 25% $O_2$. When the system 100 operates, the oxygen $O_2$ and carbon dioxide $CO_2$ are separated in the first gas separator device 340 leaving a substantially pure gaseous $CO_2$ stream which may be compressed in the first compressor unit 330. An advantage of providing $CO_2$ in a liquid phase is that it is practical during transportation. According to the invention oxygen is thus removed from the gaseous mixture before the carbon dioxide is compressed.

At least 50% of the oxygen is removed from the gaseous mixture, as this allows for a substantial energy saving when compressing the carbon dioxide into a liquid carbon dioxide.

According to an alternative embodiment least 60% of the oxygen is removed from said mixture.

According to one embodiment at least 80% of the oxygen is removed from said mixture.

According to one embodiment at least 90% of the oxygen is removed from said mixture.

According to one embodiment at least 95% of the oxygen is removed from said mixture.

According to one embodiment at least 99% of the oxygen is removed from said gaseous mixture.

The gas separator device 340 may according to one embodiment may be a heating device. The heating device may for instance be a burner where the oxygen in the gaseous mixture is used as an oxygen source instead of air, leaving a pure $CO_2$ steam of gas and water which can be collected, cleaned and handled downstream of the separator device. The heating device may also be a generator, such as for instance for obtaining central or district heating and power, using either biogas, natural gas or $H_2$ gas as input and the full flow from the anode chamber outlet of the gaseous mixture of $CO_2/O_2$ is used as an oxygen source. One alternative is to use the $H_2$ gas from the cathode chamber of the electrolyser cell as input.

According to another embodiment, the separator device 340 provides the gaseous mixture of carbon dioxide and oxygen as an oxidizer or oxidizing agent in the process where the gas is scrubbed for $CO_2$ if all the oxidant is $O_2$ mixed with $CO_2$ the flue gas will intermittently consist of pure $CO_2$ and it can thus be compressed directly with limited pre-treatment. As an example, a gas fired generator may be fueled with methane and a mixture of $CO_2/O_2$ instead of air, which leads to the exhaust gas being is pure $CO_2$ and water. The exhaust gas created is therefore pure $CO_2$, as no nitrogen from the air is injected creating NOx and N2 in the exhaust.

According to a third embodiment the separator device 340 is a biological aerobic process, such as for instance a wastewater treatment plant, which is either in flow connection to the regeneration arrangement, or where the gaseous mixture of oxygen and carbon dioxide is transported. The gaseous mixture is utilised in the wastewater treatment process, such that the oxygen in the gaseous mixture is consumed as an oxidizing agent, for instance through various enzymatic and bacterial reactions in the wastewater process. The purified $CO_2$ may then be collected and compressed.

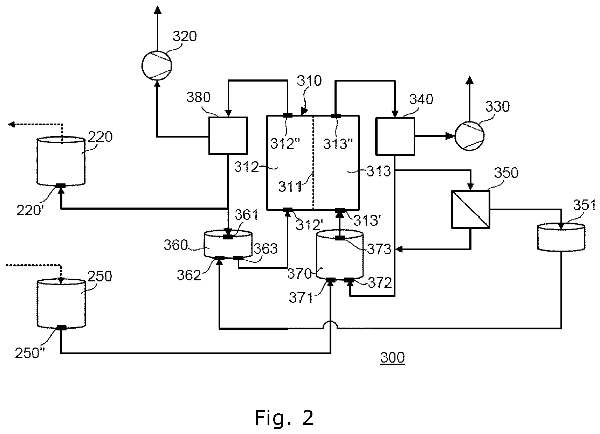

Now turning to the regeneration arrangement 300 in Fig. 2. Other than the electrolytic cell 310 and its components, which have been previously described in relation to Fig. 1, the regeneration arrangement 300 further comprises a second compressor unit 320 for compressing hydrogen gas withdrawn from the cathode chamber 312.

The regeneration arrangement 300 also comprises a second gas separator 380 for separating gaseous hydrogen H2 and, for instance, liquid aqueous potassium hydroxide KOH, withdrawn from the cathode chamber 312.

Furthermore, the regeneration arrangement 300 has a separator 350, such as a filter. For instance, the filter may be a reversed osmosis filter. This concentrator 350 is arranged downstream of the first gas separator unit 340. It is to be noted that the electrolytic cell may be sensitive to impurities in the fluid flowing through the anode and cathode chambers. Hence, there may also be a separate cleaning unit (not shown), which serves to remove impurities such as for instance nitrogen oxides NOx and sulfur oxides SOx from the spent aqueous scrubbing liquid before it enters the electrolytic cell 310. As an example, the cleaning unit may include a filter to remove particulate matter. It should be noted that in Figs 1-2, the direction of the arrows corresponds to the direction of flow of the fluids circulating in the system 100. Further, the lines of the arrows indicate a fluid or flow communication between the elements of the system.

*Chemical processes*

The solvent is then regenerated in the regeneration arrangement 300 using electrochemistry. In general, the electrochemical reaction can be split into two parts; the anode reaction and the cathode reaction. These reactions will be described below.

*The anode*

In the anode chamber 313, $O_2$ and $CO_2$ are generated in two different steps. First, $O_2$ is generated at the anode together with 4 $H^+$. Then, the H+ decreases the pH-value of the solvent and releases $CO_2$. Simultaneously, O2 is generated at the anode and the two gases are mixed in a ratio of 4:1, $CO_2$ to $O_2$. The overall reaction at the anode chamber 313 is:

$$4 \times HCO_3^- \rightarrow O_2 + 4 \times CO_2 + 2 \times H_2O + 4\ e^-$$

The reaction at the anode is:

$2 \times H_2O \rightarrow O_2 + 4 \times H^+ + 4\ e^-$

This reaction decreases the pH-value locally. This decrease in pH-value pushes the $HCO_3$-/$CO_2$ equilibrium to the right, such that:

$4 \times H^+ + 4 \times HCO_3^- \rightarrow 4 \times CO_2 + 4 \times H_2O$ which results in the release of gaseous $CO_2$ from the solvent.

*The cathode*

At the cathode, $H_2$ is produced together with OH$^-$. This reaction both generates valuable $H_2$ for downstream applications and regenerates the alkaline solvent comprising hydroxide ions (OH$^-$) for the carbon capture process. The cathode chamber reaction 312 is:

$4 \times H_2O + 4\ ^- \rightarrow 2 \times H_2 + 4 \times OH^-$.

*Power need*

The electrochemical reaction in the electrolytic cell 310 requires electrical power. The actual power consumption will depend on the technical implementation of the process of the system 100. Assuming 100 % efficiency, the minimum current required for the process can be calculated using Faraday's law of thermodynamics: $I = mFz/tM$. With the parameters as listed in Table 1 below, the current can be calculated.

Table 1 - parameters for calculating the minimum **c**urrent required for the process

| Symbol | Quantity | Value |
|--------|----------|-------|
| *m* | Mass of $O_2$ | 182 kg |
| *F* | Faraday's constant | 96485 C/mol |
| *z* | Valency number of electrons | 4 |
| *t* | Time | 1 s |
| *M* | Molar mass of $O_2$ | 32 g/mol |

The current can thus be calculated to I = 2. 18 $\times 10^9$ A. With a minimum voltage of 2 V assumed, the theoretical minimum power consumption for 1 ton of $CO_2$ will be:

$$P_{min} = 2\ V \times 2.18 \times 10^9\ A = 2.18 \times 109\ J = 4.36\ GJ.$$

For real chemical reactions, a higher energy consumption is expected. As suggested by a model based on experiments the ultimate power consumption for the capture of $CO_2$ and regeneration of the solvent is predicted to 5.88 GJ per 1 ton of $CO_2$. This process regenerates the solvent, produces $H_2$ at the cathode 312 and a mixture of $CO_2$ and $O_2$ at the anode. Further energy is required for the separation of the $CO_2$ and $O_2$ from the first gas separator 340.

$CO_2$ and $H_2$ is typically produced in a ratio of 2:1. If the downstream application is methanol production, the suitable stoichiometric ratio is 1:3 and additional $H_2$ is required for this process. Commercial electrolysis equipment produces $H_2$ with an energy consumption of 55 kWh/kg. For 1 ton of $CO_2$, the $H_2$ requirements are therefore ($m_{CO2}M_{CO2}$) $\times$ 3 = 68182 mol, which equals: 68182 mol $\times$ 2 g/mol $\times$ 55 kWh/kg = 7500 kWh = 26.98 GJ. The carbon capture regeneration process produced $H_2$ corresponding to 4.5 GJ, and the remaining energy requirements for $H_2$ production is therefore: 26.98 GJ - 4.50 GJ = 22.48 GJ. The power consumption of the carbon capture process is determined primarily by the electrochemical cell. The purification of $CO_2$ requires additional energy.

EXPERIMENTAL SECTION

*Example 1*

In the following, a $CO_2$ capture from a power plant generating 10 MW heat and power from biomass is presented in relation to three process steps: "scrubber", "regeneration" and "separation". Overall, the process requires a large amount of electrical energy. This is positive, as electrification of the carbon capture process is highly wanted and completely new. Some of the energy may be recovered as heat for district heating.

**Table 2** - 10 MW power plant CO2 capture

| Process | Scrubber | Regeneration | Separation |
|---|---|---|---|
| **In** | • Gas with ~10% $CO_2$ 2 ton $CO_2$/h <br> • Lean liquid 400 $m^3$/h | • Saturated liquid 400 $m^3$/h <br><br> • Power 3.2 MW | • Gas: 80% $CO_2$ and 20% $O_2$ 2 ton/h $CO_2$ <br> • Power 0.76 MW (Compression/ cooling without pre-separation) <br> 0.61 MW (With CO2 pre-seperation) |
| **Out** | • Gas without $CO_2$ <br> • Saturated liquid 400 $m^3$/h | • Lean liquid 400 $m^3$/h <br> • Gas: $H_2$ 45 kg/h <br> • Gas: 80% $CO_2$ and 20% $O_2$ 2 ton/h $CO_2$ | • Gas: pure $CO_2$ 2 ton/h $CO_2$ |
| **Operation** | Automatic process | Uses power | Uses power |

*Example 2*

To verify the applicability of the process using the system 100 as described herein, laboratory tests have been performed.

In the laboratory tests, a standard electrolysis cell from EC Electrocell, model Electro MP Cell was used. The electrolysis cell was provided with a Nafion 117 membrane. In operating the cell, a 1,5 M $KHCO_3$ solution was circulated over the anode side from a combined degassing/circulation tank. The liquid was circulated at 1.5 L/min. Similarly, a 1.5 M KOH solution was circulated over the cathode side from a combined degassing/circulation tank. The liquid was circulated at 1.5 L/min. Standard flowmeters and lab pumps were used. Gas flow from the degassing tanks were measured by an Aalborg GFM gas flow meter. CO2 contents were measured using a Guardian NG from Edinburgh Sensors. A standard heat plate was used to keep a constant temperature of the liquid at 40 degrees Celsius during the experiments. The pH and temperature were measured in the circulation tanks using standard online pH and temperature meters. The current density applied to the electrolyser were varied between 1-4 $kA/m^2$, using a standard power converter.

**Claims**

1.   A method of preparing a substantially pure gaseous carbon dioxide from a gaseous mixture of carbon dioxide ($CO_2$) and oxygen ($O_2$),

> wherein said gaseous mixture is withdrawn from an anode chamber (313) of an electrolytic cell (310), and wherein said electrolytic cell (310) is fed a spent aqueous scrubbing liquid from a scrubber (210), wherein said scrubber (210) scrubs a gas [having a first carbon dioxide concentration] with a first alkaline, aqueous scrubbing liquid,
> wherein said spent aqueous scrubbing liquid is regenerated in the electrolytic cell (310) by electrolysis,
>
> wherein the regeneration further comprises generating a gaseous mixture of oxygen and carbon dioxide ($CO_2$) in the anode chamber (313);
> and wherein said gaseous mixture comprises between 66 and 80 % carbon dioxide and between 20% and 34% oxygen,
> the method comprising the step of:
> treating said gaseous mixture of oxygen and carbon dioxide ($CO_2$) to remove at least 50% oxygen from said mixture.

2.   The method according to claim 1, wherein at least 60% of the oxygen is removed from the gaseous mixture, or at least 70% of the oxygen is removed from the gaseous mixture, or at least 80% of the oxygen is removed from the gaseous mixture, or at least 90% of the oxygen is removed from the gaseous mixture, or at least 95% of the oxygen is removed from the gaseous mixture, or at least 99% of the oxygen is removed from the gaseous mixture.

3.   The method according to claims 1 or 2, further comprising the step of and compressing said oxygen depleted gaseous mixture into a substantially pure liquid carbon dioxide.

4. The method according to claims 1 or 2, wherein the gas having a first carbon dioxide concentration is any one of a flue gas, an exhaustive gas, and air.

5. The method according to any one of claims 1 to 4, wherein the step of treating said gaseous mixture to remove at least 50% oxygen from said mixture comprises:
flowing said gaseous mixture through a heating device, thereby consuming said oxygen and creating an output flow of carbon dioxide and dihydrogen oxide ($H_2O$).

6. The method according to claim 5, wherein said heating device is fed with a fuel, and wherein said fuel is any one of hydrogen, natural gas or biogas.

7. The method according to claim 5, wherein said hydrogen is a gaseous hydrogen withdrawn from a cathode chamber of said electrolytic cell (313).

8. The method according to claims 1 to 4, wherein step of treating said gaseous mixture to remove at least 50% oxygen from said mixture comprises:
utilising said gaseous mixture as an oxidizer in a processes step of scrubbing a flue gas for $CO_2$.

9. The method according to any one of claims 1 to 4, wherein step of treating said gaseous mixture to remove at least 50% oxygen from said mixture comprises: utilising said gaseous mixture as an oxidizing agent in an aerobic biological process facility.

10. A system for scrubbing a gas, such as flue gas or exhaustive gas, comprising carbon dioxide to deplete the flue gas of carbon dioxide, the system comprising:

   - a scrubber arrangement (200) for scrubbing a gas with an alkaline, aqueous scrubbing liquid, comprising a scrubber (210); and
   - a regeneration arrangement (300) for regenerating spent aqueous scrubbing liquid by electrolysis, wherein:
   - the regeneration arrangement comprises an electrolytic cell (310), comprising

   an anode chamber (313) comprising an anode inlet (313') for receiving the spent aqueous scrubbing liquid and an anode outlet (313") for withdrawing oxygen and carbon dioxide,

   - wherein the scrubber (210) is in flow communication with the electrolytic cell (310);
   - a gas separator device (340) for separating oxygen and carbon dioxide withdrawn from the anode chamber (313) from each other,
   - a compressor unit (330) for compressing said substantially pure carbon

   dioxide withdrawn from said separator device (340).

11. A regeneration arrangement for regenerating a spent aqueous scrubbing liquid to provide alkaline, aqueous scrubbing liquid, the regeneration arrangement (300) comprising an electrolytic cell (310), comprising an anode chamber (313) comprising an anode inlet (313') for receiving the spent aqueous scrubbing liquid and an anode outlet (313") for withdrawing oxygen and carbon dioxide, and the cathode chamber (312) comprises an outlet (312") for withdrawing regenerated aqueous scrubbing liquid;

   - a gas separator device (340) for separating oxygen and carbon dioxide from the anode chamber (313) from each other,
   - a compressor unit (330) for compressing carbon dioxide withdrawn from the first gas separator (340).

12. The system according to claim 10 or claim 11, wherein said gas separator device (340) as a heating device.

13. The system according to claim 10 or claim 11, wherein said gas separator device (340) is an aerobic biological process facility.

14. The system according to any one of claims 10 to 13, wherein in the gas separator device (340) at least 50% of the oxygen is removed from the gaseous mixture of carbon dioxide and oxygen withdrawn from the anode chamber.

15. The system according to claim 14, wherein at least 60% of the oxygen is removed from the gaseous mixture, or at least 70% of the oxygen is removed from the gaseous mixture, or at least 80% of the oxygen is removed from the gaseous mixture, or at least 90% of the oxygen is removed from the gaseous mixture, or at least 95% of the oxygen is removed from the gaseous mixture, or at least 99 % of the oxygen is removed from the gaseous mixture.

Fig. 1

Fig. 2

Europäisches
Patentamt

European
Patent Office

Office européen
des brevets

**EUROPEAN SEARCH REPORT**

Application Number

EP 22 16 0299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 219 860 B1 (JAKOBSEN JAN STOUGAARD [DK]) 11 January 2022 (2022-01-11) | 1,2,4 | INV.<br>B01D53/14<br>B01D53/96 |
| Y | * see, in particular, examples 1,2; claims 1-28 and figures 1-6 * | 1-15 | |
| Y | Wadas Brian: "CO2 CAPTURE AND COMPRESSION TECHNOLOGIES",<br>,<br>1 June 2010 (2010-06-01), pages 1-22, XP055946893,<br>Retrieved from the Internet:<br>URL:https://dc.engconfintl.org/cgi/viewcontent.cgi?article=1035&context=co2_summit<br>[retrieved on 2022-07-27]<br>* see in particular figures at pages 5, 8 and 9 * | 1-15 | |
| Y | MORROW R.C. ET AL: "Biomass Production System (BPS) plant growth unit",<br>ADVANCES IN SPACE RESEARCH,<br>vol. 26, no. 2,<br>1 January 2000 (2000-01-01), pages 289-298, XP055947344,<br>AMSTERDAM, NL<br>ISSN: 0273-1177, DOI:<br>10.1016/S0273-1177(99)00573-6<br>* see in particular page 295, entire point "Carbon dioxide control". * | 1-15 | TECHNICAL FIELDS SEARCHED (IPC)<br><br>B01D |
| A | US 2017/107478 A1 (HARMON KEVIN C [US] ET AL) 20 April 2017 (2017-04-20)<br>* see, in particular paragraph [0520] by reference to figure 6 "CO2 for autotrophic biomass growth unit"; see also figures 1-28 and claims 1,38,46 and 54 * | 1-15 | |

-/--

The present search report has been drawn up for all claims

| Place of search | Date of completion of the search | Examiner |
|---|---|---|
| Munich | 29 July 2022 | Rumbo, Angel |

EPO FORM 1503 03.82 (P04C01)

Europäisches
Patentamt

European
Patent Office

Office européen
des brevets

# EUROPEAN SEARCH REPORT

**Application Number**

EP 22 16 0299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Power B.: "combined-cycle-carbon-capture-options-and-costs-part-i/ 1/19 ?", , 1 June 2009 (2009-06-01), pages 1-19, XP055946895, Retrieved from the Internet: URL:https://www.powermag.com/capturing-co2-gas-compression-vs-liquefaction/ [retrieved on 2022-07-27] * the whole document * | 1-15 | |
| A | CN 206 799 327 U (INST URBAN ENVIRONMENT CAS) 26 December 2017 (2017-12-26) * see, in particular, figure 1 and claims 1-10 * | 1-15 | |
| A | LEI M. ET AL: "Thermal Swing Adsorption Process for Carbon Dioxide Capture and Recovery: Modeling, Simulation, Parameters Estimability, and Identification", INDUSTRIAL & ENGINEERING CHEMISTRY RESEARCH, vol. 52, no. 22, 20 May 2013 (2013-05-20), pages 7526-7533, XP55946027, ISSN: 0888-5885, DOI: 10.1021/ie3029152 * the whole document * | 1-15 | TECHNICAL FIELDS SEARCHED (IPC) |

The present search report has been drawn up for all claims

| Place of search | Date of completion of the search | Examiner |
|---|---|---|
| Munich | 29 July 2022 | Rumbo, Angel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 0299

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2022

| Patent document cited in search report | | Publication date | Patent family member(s) | | Publication date |
|---|---|---|---|---|---|
| US 11219860 | B1 | 11-01-2022 | EP | 3995204 A1 | 11-05-2022 |
| | | | US | 11219860 B1 | 11-01-2022 |
| | | | WO | 2022096644 A1 | 12-05-2022 |
| US 2017107478 | A1 | 20-04-2017 | AU | 2016276960 A1 | 01-02-2018 |
| | | | AU | 2021203736 A1 | 01-07-2021 |
| | | | BR | 112017026665 A2 | 12-02-2019 |
| | | | CA | 2988582 A1 | 15-12-2016 |
| | | | CL | 2017003162 A1 | 01-06-2018 |
| | | | CN | 107847898 A | 27-03-2018 |
| | | | CO | 2018000152 A2 | 10-07-2018 |
| | | | DO | P2017000291 A | 15-04-2018 |
| | | | EC | SP18001932 A | 31-05-2018 |
| | | | EP | 3837043 A1 | 23-06-2021 |
| | | | GT | 201700267 A | 05-08-2019 |
| | | | IL | 256223 A | 28-02-2018 |
| | | | IL | 289129 A | 01-02-2022 |
| | | | JP | 7034907 B2 | 14-03-2022 |
| | | | JP | 2018530324 A | 18-10-2018 |
| | | | JP | 2022088392 A | 14-06-2022 |
| | | | KR | 20180030510 A | 23-03-2018 |
| | | | MA | 53207 A | 23-06-2021 |
| | | | PE | 20180391 A1 | 26-02-2018 |
| | | | PH | 12017502265 A1 | 11-06-2018 |
| | | | SG | 10202009190T A | 27-11-2020 |
| | | | SV | 2017005582 A | 03-07-2018 |
| | | | TN | 2017000518 A1 | 12-04-2019 |
| | | | US | 2017107478 A1 | 20-04-2017 |
| | | | US | 2021198615 A1 | 01-07-2021 |
| | | | WO | 2016201312 A1 | 15-12-2016 |
| CN 206799327 | U | 26-12-2017 | NONE | | |

EPO FORM P0459

For more details about this annex : see Official Journal of the European Patent Office, No. 12/82

**EP 4 238 630 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11219860 B